# EUROPEAN PATENT APPLICATION

(11) **EP 2 636 479 A1**
(43) Date of publication of application: **11.09.2013**
(21) Application number: 11838030.2
(22) Date of filing: 01.11.2011
(51) Int. Cl.: B23Q 15/00, G05B 19/4155, G21C 5/00, G21D 1/00

(54) **MACHINING CONDITION SETTING SYSTEM, MACHINING CONDITION SETTING METHOD, AND MACHINED OBJECT WHICH IS MACHINED USING SAME**

(30) Priority: 02.11.2010 JP 2010246403
(71) Applicant: Mitsubishi Heavy Industries, Ltd., Tokyo 108-8215 (JP)
(72) Inventor: MICHISHITA, Yukio, Tokyo 108-8215 (JP); KOBAYASHI, Takaaki, Tokyo 108-8215 (JP); MATSUBARA, Nariyasu, Tokyo 108-8215 (JP)
(74) Representative: Intès, Didier Gérard André
(86) International application number: PCT/JP2011/075195
(87) International publication number: WO 2012/060380

(57) **Abstract**

It is provided that a machining conditions setting system and a machining conditions setting method with which it is possible to select a machining condition for machining according to a target degree of hardness and obtain a predetermined degree of hardness by performing only the machining. The machining conditions setting system includes: a machining conditions database (5) that, by determining in advance a relationship between the machining condition and a degree of hardness of the workpiece machined under the machining condition, stores the machining condition corresponding to the material of the workpiece and a range of degree of hardness for machining; and machining conditions selection means (7) into which a material of a workpiece and a target degree of hardness are input, and which outputs a machining condition under which machining with the target degree of hardness can be performed, referring to the machining conditions database (5).

## Description

### {Technical Field}

The present invention relates to a machining conditions setting system, a machining conditions setting method and a workpiece machined using the system and method.

### {Background Art}

Austenitic stainless steel is chiefly used as material for equipment and piping or the like in nuclear power plants. It is known that by performing cold machining such as ordinary cutting and grinding and the like on austenitic stainless steel, a hardened layer is formed on a surface thereof (for example, see PTL 1 and PTL 2).
For example, it is said that generally in recirculation system piping or the like of a *boiling water reactor nuclear power plant,* if the hardness of the hardened layer becomes 300 HV or more in terms of Vickers hardness, there is a possibility of stress corrosion cracking (SCC) occurring. And the same situation is considered to be caused with respect to equipment and piping in which water circulates which is equipped in a pressurized water nuclear power plant.

Conventionally, in such piping, to prevent the occurrence of SCC, a countermeasure is adopted such as, following the machining process, performing buffing or the like on the machined surface to remove a hardened layer of the surface that is generated by the machining, or giving a compressive stress to the machined surface layer to prevent the occurrence of SCC.
That is, it is common knowledge in the art that, in the conventional machining method, a hardened layer of a hardness that exceeds the aforementioned hardness is formed accompanying machining processes.

### {Citation List}

### {Patent Literature}

{PTL 1}
   Japanese Unexamined Patent Application, Publication No. 2005-257589
{PTL 2}
   Japanese Unexamined Patent Application, Publication No. 2008-96174

### {Summary of Invention}

### {Technical Problem}

However, all of the aforementioned conventional techniques require after-treatment such as removal of a hardened layer and/or application of a compressive stress after a machining operation, which results in an increase in the working time as well as an increase in costs.
In the case of applying a compressive stress to prevent the occurrence of SCC, for example, if working such as welding that gives rise to tensile stress is carried out in a later process, the applied compressive stress will be reduced or removed, and hence the effect for preventing the occurrence of SCC will decrease or be lost.

The present invention has been made in consideration of the above described situation, and an object of the present invention is to provide a machining conditions setting system and a machining conditions setting method that can select a machining condition for machining in accordance with a target degree of hardness and obtain a predetermined degree of hardness by performing only the machining operation, as well as a workpiece machined using the machining conditions setting system and machining conditions setting method.

Another object of the present invention is to provide a machining conditions setting system and a machining conditions setting method that can perform machining, reducing possibility of the occurrence of stress corrosion cracking even without performing after-treatment and that can shorten a working time and decrease costs required for machining a workpiece, as well as a workpiece machined using the machining conditions setting system and machining conditions setting method.

### {Solution to Problem}

To solve the above problems, the present invention adopts the following solutions.
That is, a first aspect of the present invention is a machining conditions setting system including: a machining conditions database storing a machining condition which corresponds to a material of a workpiece and a range of degree of hardness of the workpiece after a machining with the machining condition, for which a relationship between the machining condition and a degree of hardness of the workpiece machined under the machining condition is determined in advance with respect to each machining condition for machining the workpiece to be machined; and machining conditions selection means into which a material of the workpiece and a target degree of hardness are inputted, and which outputs the machining condition under which a machining can be performed with the target degree of hardness, referring to the machining conditions database.

According to the machining conditions setting system of the present aspect, since the database stores a machining condition which corresponds to a material of a workpiece and a range of degree of hardness of the workpiece after a machining with the machining condition, for which a relationship between the machining condition and a degree of hardness of the workpiece machined under the machining condition is determined in advance with respect to each machining condition for machining the workpiece to be machined, a material of a workpiece and a target degree of hardness are inputted into the machining conditions selection means, and the machining conditions selection means can refer to the machining conditions database and output a machining condition under which machining with the target degree of hardness can be performed.
When a workpiece is subjected to machining according to a machining condition obtained in this manner, a workpiece having a target degree of hardness can be manufactured. Accordingly, it is possible to obtain a machined workpiece having a predetermined degree of hardness by performing only machining under a selected machining condition.

In the above described aspect, it is preferable that a degree of hardness that can prevent occurrence of stress corrosion cracking is included as the range of degree of hardness.

Thus, by inputting a degree of hardness that can prevent the occurrence of stress corrosion cracking, the machining conditions selection means can select a machining condition that makes it possible to obtain the relevant degree of hardness. Therefore, when the workpiece is subjected to machining according to the selected machining condition, since the workpiece can be made to have a degree of hardness that can prevent the occurrence of stress corrosion cracking, the machining can be performed, reducing possibility of the occurrence of SCC even without performing buffing or the like on the surface of the workpiece after the machining or performing after-treatment such as application of a compressive stress to a machined surface layer. It is thereby possible to shorten the working time and decrease the costs required for machining of the workpiece.

A second aspect of the present invention is a machining conditions setting method including: a storage step of determining in advance a relationship between a machining condition and a degree of hardness of the workpiece machined under the machining condition with respect to each machining condition for machining a workpiece to be machined, and then storing the machining condition which corresponds to a material of the workpiece and a range of degree of hardness of the workpiece after a machining with the machining condition; an input step of inputting a material of the workpiece and a target degree of hardness; and a machining conditions selection step of outputting the machining condition under which a machining can be performed with the target degree of hardness, referring to the machining conditions database.

According to the machining conditions setting method of the present aspect, since the database stores a machining condition which corresponds to a material of a workpiece and a range of degree of hardness of the workpiece after a machining with the machining condition, for which a relationship between the machining condition and a degree of hardness of the workpiece machined under the machining condition is determined in advance with respect to each machining condition for machining the workpiece to be machined in the storage step, when a material of a workpiece and a target degree of hardness are inputted in the input step, a machining condition under which machining at the target degree of hardness is able to be performed can be output by referring to the machining conditions database based on the inputted material of the workpiece and target degree of hardness in the machining conditions selection step.
When a workpiece is subjected to machining according to a machining condition obtained in this manner, a workpiece having a target degree of hardness can be manufactured. Accordingly, it is possible to obtain a machined workpiece having a predetermined degree of hardness by performing only machining under a selected machining condition.

In the above described aspect, it is preferable that, in the storage step, a degree of hardness that can prevent occurrence of stress corrosion cracking is included as the range of degree of hardness.

Thus, by inputting a degree of hardness that can prevent the occurrence of stress corrosion cracking, a machining condition that makes it possible to obtain the relevant degree of hardness can be selected in the machining conditions selection step. Therefore, when the workpiece is subjected to machining according to the selected machining condition, since the workpiece can be made to have a degree of hardness that can prevent the occurrence of stress corrosion cracking, the machining can be performed, reducing possibility of the occurrence of SCC even without performing buffing or the like on the surface of the workpiece after the machining or performing after-treatment such as application of a compressive stress to a machined surface layer. It is thereby possible to shorten the working time and decrease the costs required for machining of the workpiece.

A third aspect of the present invention is a workpiece that is subjected to machining according to a machining condition that is output using the machining conditions setting system according to the first aspect or a machining condition that is output by means of the machining conditions setting method according to the second aspect.

Thus, since machining is performed under a machining condition selected by the machining conditions setting system according to the first aspect or the machining conditions setting method according to the second aspect, a workpiece with a surface layer having a predetermined degree of hardness can be obtained.

### {Advantageous Effects of Invention}

According to the present invention, since the database stores a machining condition which corresponds to a material of a workpiece and a range of degree of hardness of the workpiece after a machining with the machining condition, for which a relationship between the machining condition and a degree of hardness of the workpiece machined under the machining condition is determined in advance with respect to each machining condition for machining the workpiece to be machined, when a material of a workpiece and a target degree of hardness are inputted into machining conditions selection means, the machining conditions selection means can refer to the machining conditions database and output a machining condition under which machining with the target degree of hardness can be performed. A workpiece having a target degree of hardness can be manufactured by only machining a workpiece according to the selected machining condition.

### {Brief Description of Drawings}

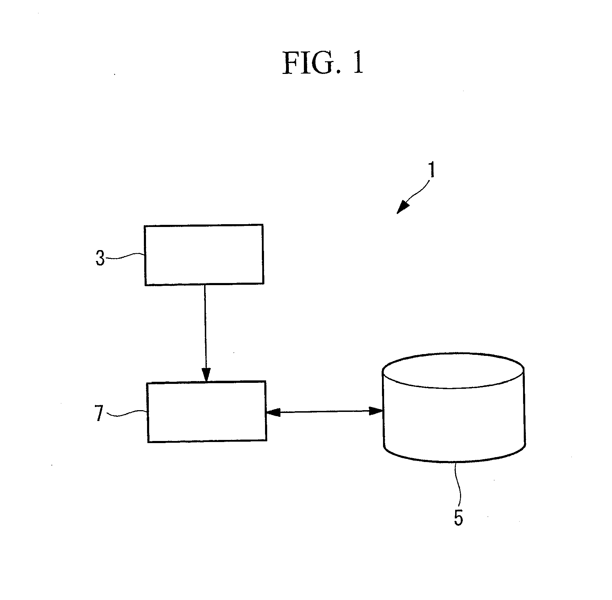

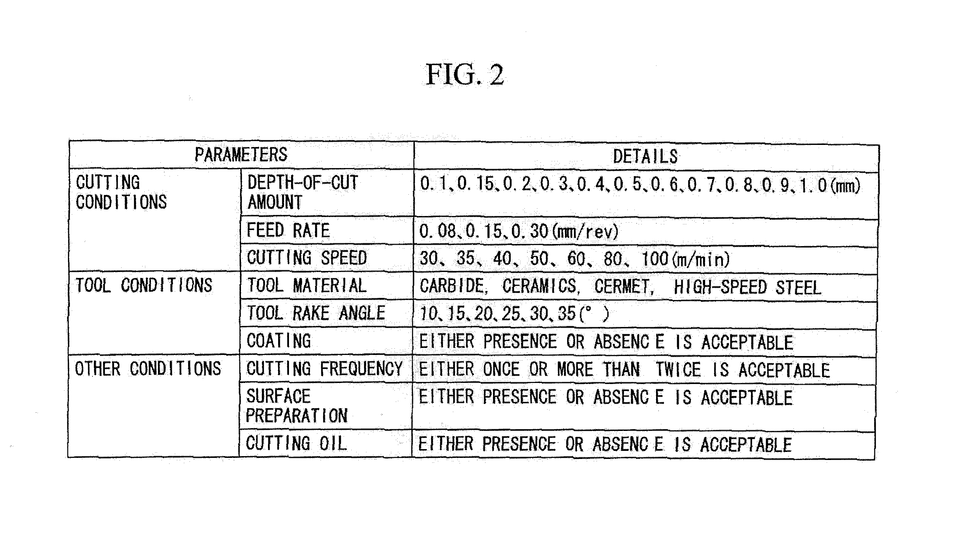

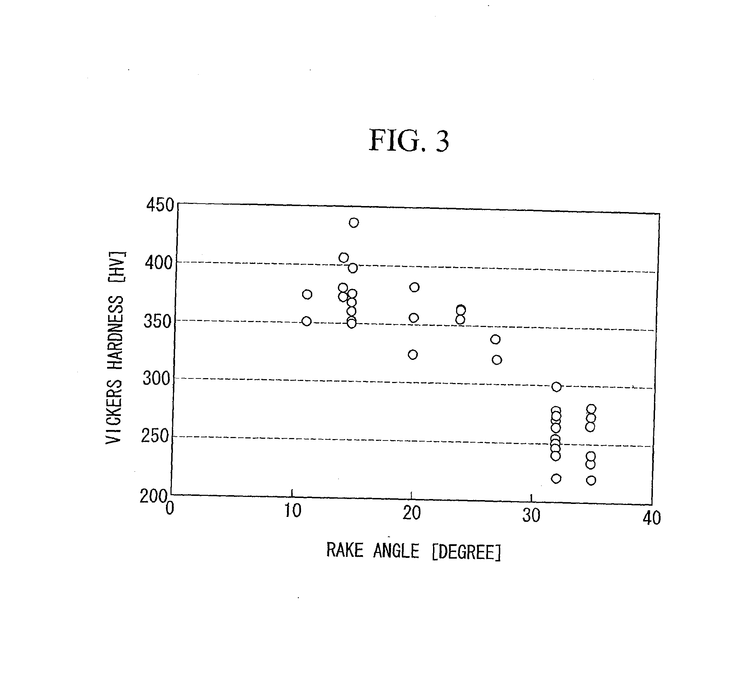

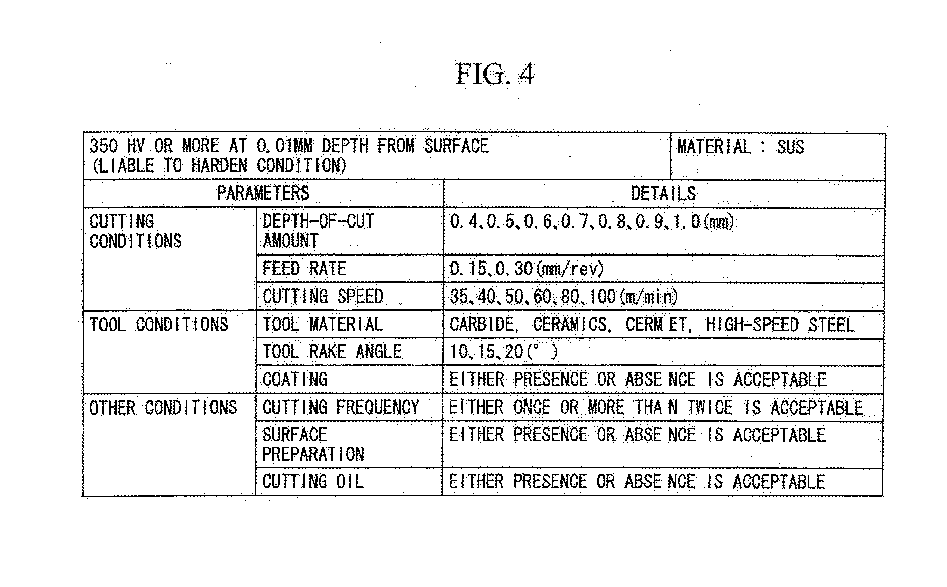

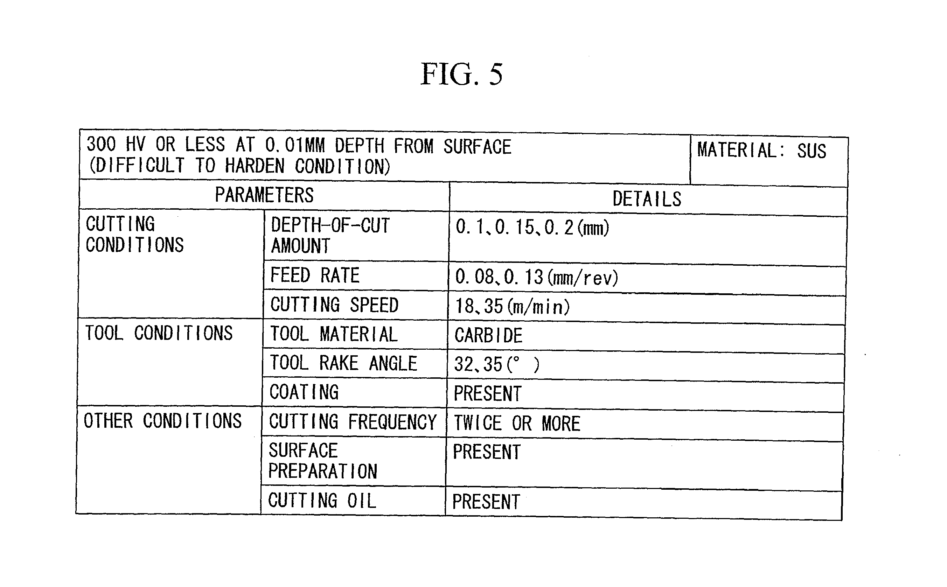

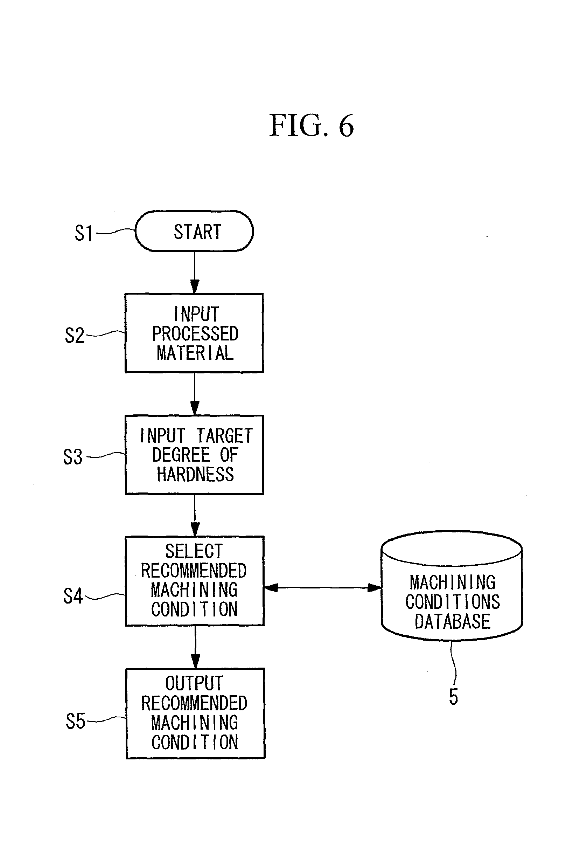

{Fig. 1} Fig. 1 is a block diagram illustrating a machining conditions setting system according to an embodiment of the present invention.
{Fig. 2} Fig. 2 is a chart showing an example of machining conditions that are stored in a machining conditions database.
{Fig. 3} Fig. 3 is a graph illustrating a relationship between a rake angle of a cutting tool and hardness of a surface layer obtained by means of a cutting test, that is a part of data for machining conditions stored in the machining conditions database.
{Fig. 4} Fig. 4 is a chart showing an example of details of machining conditions that are stored in the machining conditions database.
{Fig. 5} Fig. 5 is a chart showing a different example of details of machining conditions that are stored in the machining conditions database.
{Fig. 6} Fig. 6 is a flowchart illustrating a flow of processing that selects a machining condition that is selected using the machining conditions setting system shown in Fig. 1.

### {Description of Embodiments}

Hereunder, a machining conditions setting system according to an embodiment of the present invention is described with reference to Figs. 1 to 6.
Fig. 1 is a block diagram illustrating the machining conditions setting system according to said embodiment of the present invention.

The machining conditions setting system 1 includes an input section 3 through which a material of a workpiece and a target degree of hardness are inputted, a machining conditions database 5 that stores a machining condition corresponding to the material of the workpiece and a range of degree of hardness of the workpiece for machining, and a machining conditions selection section 7 that refers to the machining conditions database 5 in accordance with the material of the workpiece and the target degree of hardness that are inputted through the input section 3, and selects and outputs a machining condition under which machining at the target degree of hardness can be performed.

Fig. 2 is a chart showing an example of machining conditions that are stored in the machining conditions database 5. Cutting conditions that show the state of a cutting operation, tool conditions that show the state of a cutting tool that is used for cutting, and other conditions are used as the machining conditions.
As the cutting conditions, the amount of depth-of-cut per cut by the tool, a feeding rate per revolution, and a cutting speed are adopted.
As the tool conditions, a tool material, a tool rake angle, a tool tip R that shows a curve of the tip, a tool clearance angle, and presence/absence of a coating are adopted.
As the other conditions, a cutting frequency when machining, whether or not surface preparation is performed beforehand on the workpiece, and whether or not cutting oil is used at the time of cutting are adopted.

Data that is stored in the machining conditions database 5 is acquired by performing cutting (cutting tests) under conditions in which the above described machining conditions are changed to various conditions, and measuring the degree of hardness of the workpiece after the tests.
For example, Fig. 3 is a graph illustrating a relationship between a rake angle of a cutting tool and hardness of a surface layer obtained by performing a cutting test. That is, Fig. 3 illustrates results obtained by performing machining of austenitic stainless steel in which the rake angle of the tool was varied, and measuring the hardness of a surface portion (position at a depth of 0.01 mm) of a cutting surface after the test by measuring the Vickers hardness under a load of 10 gf.
The rake angles of the cutting tool used in the test were 11°, 14°, 15°, 20°, 24°, 27°, 32° and 35°.

When the rake angle was between 11° and 27°, cutting was performed by changing the cutting conditions to a variety of cutting conditions within the following ranges: a cutting speed of 7 to 87 m/min, a depth-of-cut amount of 0.1 to 1 mm, and a feeding rate of 0.08 to 0.25 mm/rev.
When the rake angle was 32° and 35°, cutting was performed by changing the cutting conditions to a variety of cutting conditions within the following ranges: a cutting speed of 18 to 35 m/min, a depth-of-cut amount of 0.1 to 0.2 mm, and a feeding rate of 0.08 to 0.13 mm/rev.
The cutting with the rake angles of 32° and 35° was carried out in such a manner that, after the cutting using the rake angles of 11° to 27° was completed, the cutting tool was replaced with a cutting tool with rake angles of 32° and 35°.

As will be understood from Fig. 3, the cutting tool having rake angles from 11° to 27° leads to showing Vickers hardness of more than 320 HV even when the cutting conditions are changed.
In contrast, with respect to the cutting tool having rake angles of 32° and 35°, the Vickers hardness does not exceed 300 HV even if the cutting conditions are changed, and it is thus found that the hardness of the surface decreases in comparison to those from the machining using the cutting tool having rake angles from 11° to 27°.

Data is collected by performing the aforementioned cutting tests while changing the material of the workpiece and the machining conditions. The collected data is collated with respect to ranges of degree of hardness and machining conditions each of which enables obtainment of its relevant range of degree of hardness for respective materials to form a database. Fig. 4 and Fig. 5 illustrate examples thereof.
Fig. 4 illustrates a database that shows machining conditions under which the degree of hardness becomes 350 HV or more (range of degree of hardness) at a surface depth of 0.01 mm with respect to austenitic stainless steel. Fig. 5 illustrates a database that shows machining conditions under which the degree of hardness becomes 300 HV or less (range of degree of hardness) at a surface depth of 0.01 mm with respect to austenitic stainless steel.
The range of degree of hardness shown in Fig. 5 includes a degree of hardness that can prevent the occurrence of stress corrosion cracking with respect to austenitic stainless steel.

Fig. 4 and Fig. 5 illustrate databases for a workpiece made of austenitic stainless steel. For another material, for example, a material such as Inconel, that is an object of machining, it is necessary to perform cutting tests and prepare data regarding the machining conditions in advance and store the date in the machining conditions database 5.
In such case, the value of 300 HV or less that is a specific value of a range of degree of hardness that includes a degree of hardness that can prevent the occurrence of stress corrosion cracking of austenitic stainless steel that is shown in Fig. 5 will differ according to the material such as Inconel.

Operations of the machining conditions setting system 1 configured as described above will now be described based on Fig. 6, taking a thinning process (machining process) for general piping in a pressurized water nuclear power plant as an example. The general piping prior to undergoing a thinning process is a workpiece of the present invention, and the general piping that has undergone the thinning process is a machined workpiece of the present invention.
A primary system of a pressurized water nuclear power plant includes piping systems other than main coolant pipes through which a primary coolant circulates. For example, such piping systems include: a piping system that performs emergency core cooling and emergency boron injection at the time of a loss of primary cooling water accident and at the time of a main steam pipe rupture; a piping system that supplies make-up water to maintain the volume of the primary coolant when the primary coolant contracts due to a decrease in the load; and a piping system that removes heat of the primary coolant after a reactor is stopped, and injects boric acid solution of a refueling water pump into the reactor core to lower the temperature at the time of a loss of coolant accident. Piping utilized in these piping systems is referred to as "general piping" in contrast to the main coolant pipes. The aforementioned general piping is formed with austenitic stainless steel such as SUS316 and SUS304.

Fig. 6 is a flowchart illustrating a flow of processing in which a machining condition is selected, using the machining conditions setting system 1.
As described above, as a storage step, for each machining condition with respect to machining of a workpiece which is subjected to the machining, a relationship between the machining condition and its degree of hardness of the workpiece that is machined under the machining condition is determined in advance and the machining condition corresponding to the material of the workpiece and a range of degree of hardness for machining is stored in the machining conditions database 5.

In this state, selection of a machining condition is started (step S1). First, information that the material of the general piping is SUS304 austenitic stainless steel is inputted through the input section 3 (step S2).
Next, as a target degree of hardness, for example, 300 HV or less that is a degree of hardness that can prevent the occurrence of stress corrosion cracking (SCC) is inputted through the input section 3 (step S3).
Step S2 and step S3 are each input steps, and the order thereof may be reversed.

When the material of the workpiece and the target degree of hardness are inputted by the input section 3, the machining conditions selection section 7 receives the inputted information and selects a recommended machining condition (step S4).
The machining conditions selection section 7 selects a database that includes the inputted material and target degree of hardness from among a database group stored in the machining conditions database 5. In this case, the machining conditions selection section 7 selects the database shown in Fig. 5.
The machining conditions selection section 7 outputs a recommended machining condition based on the selected database (step S5: output step).

When the machining conditions selection section 7 selects, in accordance with the inputted conditions, a database as shown, for example, in Fig.4 which has multiple alternatives for each machining condition the machining conditions selection section 7 selects a condition that is most used among the multiple alternatives, in other words, a common condition.

Thus, according to the machining conditions setting system 1 of the present embodiment, for each machining condition with respect to machining of a workpiece which is subjected to the machining, a relationship between the machining condition and a degree of hardness of the workpiece that is machined under the machining condition is determined in advance and the machining condition corresponding to the material of the workpiece and a range of degree of hardness for machining is stored in the machining conditions database 5. Hence, the material of the general piping that is the workpiece and the target degree of hardness for the thinning process are inputted into the machining conditions selection section 7, and then the machining conditions selection section 7 can refer to the machining conditions database 5 and output a machining condition for machining under which machining at the target degree of hardness can be performed.

When a thinning process of general piping is performed by machining according to machining conditions obtained in this manner, machining can be performed so that the degree of hardness at a position of 0.01 mm in the surface layer is 300 HV or less, in other words, so as to finish the surface in a state in which the surface has less SCC sensitivity. Therefore, a thinning portion of general piping that has a predetermined degree of hardness can be obtained by only performing machining under machining conditions selected by the machining conditions selection section 7.

Thus, since a thinning portion of general piping can be machined so that the degree of hardness at a position of 0.01 mm in the surface layer is 300 HV or less by the machining, the occurrence of stress corrosion cracking can be prevented.
Therefore, it is possible to prevent the occurrence of SCC by only performing machining, and without performing after-treatment such as, for example, removal of a hardened layer by buffing, pickling or electrolytic polishing and/or applying a compressive stress by peening or heat treatment (for example, by use of laser, etc.) or the like which has conventionally been employed.
As described above, since only machining is required and after-treatment can be omitted, the working time required for the thinning process can be shortened and the cost thereof can be reduced.
Since the hardness of the surface layer is low, even if working such as welding that produces tensile stress is performed after the machining, the SCC resistance can be maintained.

The present invention is not limited to the above described embodiment, and various modifications may be made without departing from the spirit and scope of the present invention.

For example, although the present invention is applied to a thinning process of general piping in a pressurized water nuclear power plant in the present embodiment, the present invention is not limited to a thinning process and can also be applied to general piping or other kinds of machining. The present invention can also be applied to machining of pipes of a secondary system or the like in a pressurized water nuclear power plant, and of recirculation system piping in a *boiling water reactor nuclear power plant* or other piping. Furthermore, the present invention can also be applied to machining of pipes in a chemical plant or a thermal power plant or the like.

The present invention is not limited to machining of pipes, and can be applied to machining of equipment and piping made of austenitic stainless steel in various shapes such as plate material and block material.
It is also possible to use the present invention for machining of material that exhibits similar behavior to that of austenitic stainless steel such as, for example, Inconel that is a nickel-based alloy.

### {Reference Signs List}

1 Machining conditions setting system
3 Input means
5 Machining conditions database
7 Machining conditions selection means

## Claims

1. A machining conditions setting system, comprising:
a machining conditions database storing a machining condition which corresponds to a material of a workpiece and a range of degree of hardness of the workpiece after a machining with the machining condition, for which a relationship between the machining condition and a degree of hardness of the workpiece machined under the machining condition is determined in advance with respect to each machining condition for machining the workpiece to be machined; and
machining conditions selection means into which a material of the workpiece and a target degree of hardness are inputted, and which outputs the machining condition under which a machining can be performed with the target degree of hardness, referring to the machining conditions database.

2. The machining conditions setting system according to claim 1, wherein the range of degree of hardness includes a degree of hardness that can prevent occurrence of stress corrosion cracking.

3. A machining conditions setting method, comprising:
a storage step of determining in advance a relationship between a machining condition and a degree of hardness of the workpiece machined under the machining condition with respect to each machining condition for machining a workpiece to be machined, and then storing the machining condition which corresponds to a material of the workpiece and a range of degree of hardness of the workpiece after a machining with the machining condition;
an input step of inputting a material of the workpiece and a target degree of hardness; and
a machining conditions selection step of outputting the machining condition under which a machining can be performed with the target degree of hardness, referring to the machining conditions database.

4. The machining conditions setting method according to claim 3, wherein, in the storage step, the range of degree of hardness includes a degree of hardness that can prevent occurrence of stress corrosion cracking.

5. A workpiece that has been subjected to machining according to a machining condition that is output using a machining conditions setting system set forth in claim 1 or claim 2 or a machining condition that is output by means of a machining conditions setting method set forth in claim 3 or claim 4.
